# EUROPEAN PATENT APPLICATION

(11) **EP 0 987 547 A2**
(43) Date of publication of application: **22.03.2000**
(21) Application number: 99118554.7
(22) Date of filing: 20.09.1999
(51) Int. Cl.: G01N 27/417

(54) **Gas sensor**

(30) Priority: 18.09.1998 JP 26533798
(71) Applicant: NGK SPARK PLUG CO., LTD, Mizuho-ku Nagoya-shi Aichi (JP)
(72) Inventor: Sugaya, Satoshi, Konan, Aichi (JP); Nadanami, Norihiko, Komaki, Aichi (JP); Ishida, Noboru, Kakamigahara, Gifu (JP); Oshima, Takafumi, Nagoya, Aichi (JP); Yamada, Tetsuo, Kasugai, Aichi (JP)
(74) Representative: Zimmermann, Gerd Heinrich

(57) **Abstract**

A gas sensor comprises a first pump cell 6 including first internal and external electrodes 10 and 11 so formed as to face from inside and outside a first flow passage 2, respectively, for pumping oxygen out from, and into, the first flow passage, and a second pump cell 8 including second internal and external electrodes 14 and 15 so formed as to face from inside and outside a second flow passage 4 communicating with the first flow passage through a diffusion resistance, wherein a measurement gas component undergoes reaction inside the second flow passage 4 and a current corresponding to the concentration of the measurement gas component flows between the electrodes 14 and 15 through the oxygen ion conductor. At least a part of the first internal electrode 10 contains a platinum group element and Cu.

## Description

This invention relates to a gas sensor.

Nitrogen oxide concentration measuring equipment that has so far been proposed includes a sensor comprising first and second cavity portions communicating with each other and first and second pump cells facing the first and second cavity portions, respectively. According to this sensor, oxygen is pumped out from, or into, the first cavity portion by the first pump cell, and a gas controlled to a predetermined low oxygen concentration is allowed to diffuse into the second cavity portion. The nitrogen oxides in the gas subject to the oxygen concentration control by the second pump cell are dissociated, and the resulting oxygen ions are caused to migrate through the solid electrolyte. The sensor determines the nitrogen oxide concentration on the basis of this pump current flowing through the second pump cell.

The reasons why the gas diffusing into the second cavity portion is controlled to a low oxygen concentration is because the pump current flowing through the second pump cell is the one resulting from the oxygen ion conduction, and this pump current quantity is affected by not only the nitrogen oxide concentration but also by the oxygen concentration diffusing to the second cavity portion, and affects measurement accuracy.

The first pump cell comprises an oxygen ion-conductive solid electrolyte layer, an internal electrode so formed on this solid electrolyte layer as to face the first cavity portion and an external electrode so formed as to face a measured atmosphere. Japanese Patent Application Nos. 9-288086 and 9-347232, for example, use a porous electrode produced by adding Au to a platinum group element as the internal electrode facing the first cavity portion of the first pump cell.

This is to pump out oxygen sufficiently from the first cavity portion while dissociation of nitrogen oxides is being restricted to a certain extent at the first cavity portion. In short, this arrangement is directed to make it possible to stabily measure the nitrogen oxide concentration for a long period of time without being affected by oxygen.

When Au is added to the platinum group element, however, the capacity of pumping up oxygen from the first cavity portion, that is, the oxygen pumping capacity, drops. As a result, a high voltage must be applied between the internal electrode and the external electrode of the first pump cell to make up for the drop of this oxygen pumping capacity, inviting the problems that dissociation of the nitrogen oxides (particularly, NO) proceeds in the first cavity portion and correct measurement of the nitrogen oxide concentration becomes difficult.

It is the object of the present invention to overcome the drawbacks and disadvantages of the prior art. This object is solved by the gas sensor of independent claims 1 and 5, and by the oxygen pump cell of independent claim 10.

Further advantageous features, aspects and details of the invention are evident from the dependent claims, description, examples and figures. The claims are to be understood as a fist non-limiting approach of defining the invention in general terms.

The invention generally relates to a gas sensor, more particularly, to a gas sensor for measuring a nitrogen oxide concentration, an HC gas concentration or an NH₃ gas concentration in an exhaust gas of internal combustion engines for driving automobiles, ships, airplanes, etc, or in an exhaust gas of industrial internal combustion engines, or in a combustion gas of boilers.

According to one aspect, the present invention provides a gas sensor having electrodes which reduce the oxygen concentration dependence of the gas concentration measurement.

According to one aspect of the present invention, there is provided a gas sensor comprising a first flow passage communicating with a measured atmosphere through a first diffusion resistance portion; a second flow passage communicating with the first flow passage through a second diffusion resistance portion; a first pump cell having porous electrodes formed on an oxygen ion conductor in such a manner as to face the first flow passage from inside and outside the first flow passage (hereinafter referred to as a "first internal electrode" and a "first external electrode", respectively), for pumping oxygen out from, and into, the first flow passage through the oxygen ion conductor; and a second pump cell having porous electrodes formed on an oxygen ion conductor in such a manner as to face the second flow passage from inside and outside the second flow passage, for causing a current, that is generated when a measurement object gas component is dissociated, or oxidized, or reduced, inside the second flow passage in accordance with the concentration of the measurement object gas component, to flow between the porous electrodes depending on conductivity of oxygen ions; wherein at least a part of the first internal electrode contains a platinum group element and Cu.

According to a further aspect of the present invention, there is provided a gas sensor comprising a first flow passage communicating with a measured atmosphere through a first diffusion resistance portion; a second flow passage communicating with the first flow passage through a second diffusion resistance portion; a first pump cell having porous electrodes formed on an oxygen ion conductor in such a manner as to face the first flow passage from inside and outside the first flow passage (hereinafter referred to as a "first internal electrode" and a "first external electrode", respectively), for pumping oxygen out from, and into, the first flow passage through the oxygen ion conductor; and a second pump cell having porous electrodes formed on an oxygen ion conductor in such a manner as to face the second flow passage from inside and outside the second flow passage, for causing a current, that is generated when a measurement object gas component is dissociated, or oxidized, or reduced, inside the second flow passage in accordance with the concentration of the measurement object gas component, to flow between the porous electrodes depending on conductivity of oxygen ions; wherein only the outer peripheral portion of said first internal electrode contains a platinum group element and Cu.

According to another aspect of the present invention, there is provided a gas sensor comprising a first flow passage communicating with a measured atmosphere through a first diffusion resistance portion; a second flow passage communicating with the first flow passage through a second diffusion resistance portion; a first pump cell having porous electrodes formed on an oxygen ion conductor in such a manner as to face the first flow passage from inside and outside the first flow passage (hereinafter referred to as a "first internal electrode" and a "first external electrode", respectively), for pumping oxygen out from, and into, the first flow passage through the oxygen ion conductor; and a second pump cell having porous electrodes formed on an oxygen ion conductor in such a manner as to face the second flow passage from inside and outside the second flow passage, for causing a current, that is generated when a measurement object gas component is dissociated, or oxidized, or reduced, inside the second flow passage in accordance with the concentration of the measurement object gas component, to flow between the porous electrodes depending on conductivity of oxygen ions; wherein at least a part of the first internal electrode contains a platinum group element and Cu, and is obtainable through firing a green sheet comprising Cu-containing powder with a grain size of 0.2 to 5 µm.

According to a preferred aspect of the present invention, the gas sensor further comprises an oxygen concentration sensing electrode so formed on an oxygen ion conductor as to detect an oxygen concentration in the gas introduced into the gas sensor (for example, the oxygen concentration in the gas diffusing from the first flow passage to the second flow passage), the oxygen pump-up or pump-in quantity by the first pump cell is controlled on the basis of the potential of this oxygen concentration sensing electrode, and at least a part of the oxygen concentration contains a platinum group element and Cu.

According to another preferred aspect of the present invention, there is provided an oxygen pump cell comprising one of electrodes so formed on an oxygen ion conductor as to face a flow passage for controlling an oxygen concentration, and containing a platinum group element as a main electrode component, and the other electrode so formed as not to face the flow passage, wherein Cu is added to the one electrode so that a critical voltage applied between the one and other electrodes in order to cause a critical current of oxygen to flow through the oxygen ion conductor drops by at least 50 mV in comparison with the case where the one electrode comprises an electrode containing Au added to a platinum group element, and oxygen is pumped out from, or pumped into, the flow passage by dissociating oxygen or an oxide on the one or other electrode and by causing the resulting oxygen ions to flow through the oxygen ion conductor, and a gas the oxygen concentration of which is controlled is generated inside the flow passage.

When the nitrogen oxide concentration is measured, for example, the Cu-containing porous electrode according to the present invention has a lower capacity of restricting dissociation of nitrogen oxides (particularly, NO) in the flow passage (first flow passage) for controlling the oxygen concentration than the Au-containing porous electrode according to the prior art in which Au is added to a platinum group electrode. On the contrary, the Cu-containing porous electrode of the present invention has a by far higher oxygen pumping capacity for dissociating oxygen and pumping the oxygen ions so dissociated into and out through the oxygen ion conductor. Therefore, when the Cu-containing porous electrode of the present invention is used, the voltage applied between the electrodes as the driving force for pumping oxygen in and out can be lowered, and dissociation of the nitrogen oxides in the flow passage for controlling the oxygen concentration can be restricted as a whole.

As a result, the drop of measurement accuracy resulting from dissociation of the nitrogen oxides (particularly, NO) in the flow passage for controlling the oxygen concentration can be prevented, and extremely and strictly high accuracy measurement of the concentration can be conducted.

When the Cu-containing porous electrode is used for the oxygen concentration sensing electrode in the same way as the first internal electrode, dissociation of the nitrogen oxides on this oxygen concentration sensing electrode can be restricted in the flow passage for controlling the oxygen concentration, and measurement accuracy can be improved eventually.

When the HC gas concentration is measured, the Cu-containing porous electrode according to the present invention has a lower catalytic function for oxidizing the HC gas than the Au-containing porous electrode of the prior art in which Au is added to the platinum group element, but has by far higher oxygen pumping capacity. Therefore, when the Cu-containing porous electrode is used for the internal electrode of the first pump cell and/or the oxygen concentration sensing electrode, this Cu-containing porous electrode can restrict the oxidation of the HC gas components in the flow passage for controlling the oxygen concentration. In consequence, the HC gas concentration can be measured highly accurately.

Hereinafter, preferred embodiments of the present invention will be explained.

According to one preferred embodiment of the present invention, at least a part of an electrode, formed on an ion conductor, for pumping oxygen into and out from a flow passage through the oxygen ion conductor so as to keep an oxygen gas concentration introduced into a gas sensor constant contains a platinum group element and Cu.

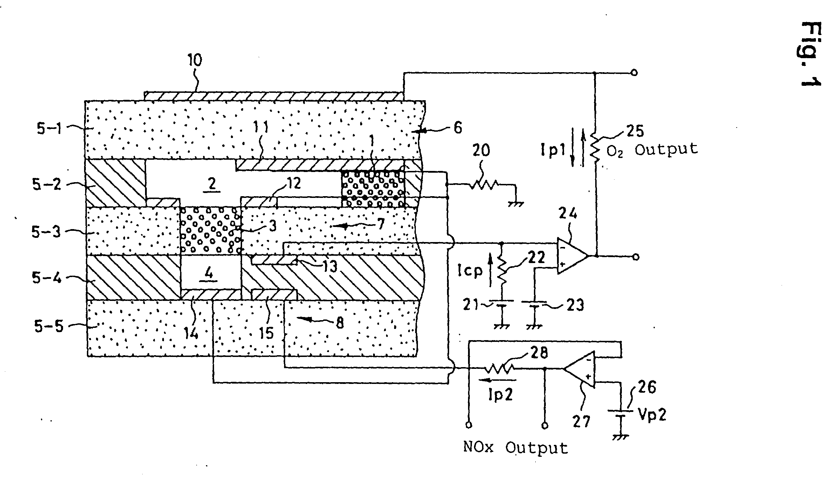

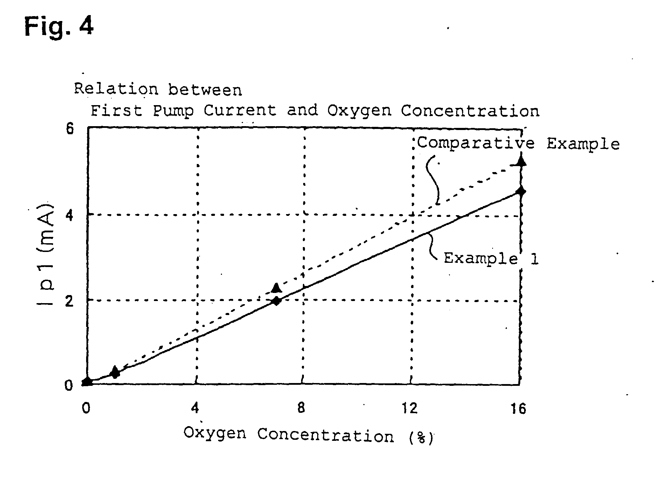

According to another preferred embodiment of the present invention, at least a part of an electrode, so formed on the oxygen ion conductor as to come into contact with the gas introduced into the gas sensor, for measuring the oxygen concentration in the gas, that is, a part of an oxygen concentration sensing electrode, contains a platinum group element and Cu. This oxygen concentration sensing electrode can be formed on the oxygen ion conductor in such a manner as to face a flow passage for controlling the oxygen concentration (first flow passage in Fig. 1) or another flow passage (second flow passage 4 in Fig. 4) communicating with the flow passage described above through a diffusion resistance portion (second diffusion resistance portion 3 in Fig. 1), or can be formed inside this diffusion resistance portion. Preferably, the voltage to be applied to the electrode for pumping oxygen in/out is controlled on the basis of the potential occurring in this electrode (electromotive force of oxygen concentration cell) so as to form a gas the oxygen concentration of which is controlled to a constant level.

The Cu-containing porous electrode according to the present invention can be applied appropriately to a gas sensor of the type wherein a gas having a controlled oxygen concentration is formed, an electrode coming into contact with this gas having the controlled oxygen concentration is formed on an oxygen ion conductor, the components of a measurement object gas undergo reaction on this electrode, oxygen ions flow through the oxygen ion conductor and the concentration of the measurement object gas is detected on the basis of the current generated by this flow of the oxygen ions. For example, the Cu-containing porous electrode according to the present invention is applied to gas sensors for measuring the concentrations of the measurement object gas components containing oxygen, or the concentrations of the measurement object gas components that are oxidized or reduced. More concretely, the electrode is applied to gas sensors for measuring the concentrations of nitrogen oxides (NOx), HC or NH₃.

The fundamental principle of the nitrogen oxide concentration measurement using the gas sensor according to the present invention will be hereby explained. First, O₂ is dissociated on the first internal electrode (reference numeral 11 in Fig. 1) facing the first flow passage (2 in Fig. 1) and the resulting oxygen ions flow through the oxygen ion conductor (5-1 in Fig. 1). In consequence, the oxygen concentration in the gas diffusing into the second flow passage (4 in Fig. 1) is controlled to a low and constant concentration as much as possible. On the other hand, a critical current flowing between the electrodes (between 14 and 15 in Fig. 1) of the second pump cell (8 in Fig. 1) facing the second flow passage ideally comprises the sum of the current component of the oxygen ions resulting from dissociation of the nitrogen oxides and the current component of the oxygen ions resulting from dissociation of O₂. The latter current component can be regarded as constant when the oxygen concentration constant control described above is executed. Therefore, the nitrogen oxide concentration can be measured on the basis of the critical current flowing through the second pump cell.

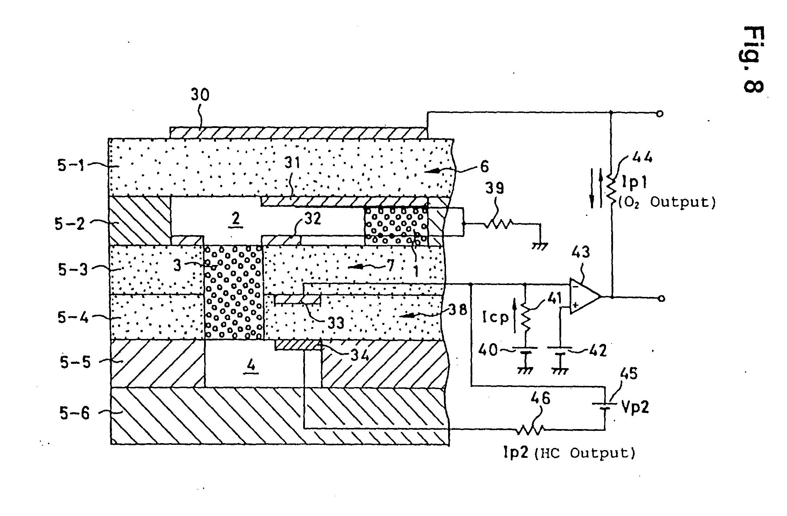

Next, the principle of the HC gas concentration measurement using the gas sensor of the present invention will be explained. Namely, O₂ is dissociated lest the HC gas is oxidized as much as possible on the first internal electrode (31 in Fig. 8) facing the first flow passage (2 in Fig. 8), and the resulting oxygen ions flow through the oxygen ion conductor (5-1 in Fig. 8). In consequence, the oxygen concentration in the gas diffusing into the second flow passage (4 in Fig. 8) is controlled to a constant and low concentration to the maximum possible extent. Meanwhile, the HC gas component is oxidized on the second internal electrode (34 in Fig. 8) facing the second flow passage and remaining O₂ is dissociated. As the resulting oxygen ions flow through the oxygen ion conductor (5-4 in Fig. 8), a current flows between the electrodes (between 33 and 34 in Fig. 8) of the second pump cell (38 in Fig. 8). The amount of O₂ dissociated by executing the oxygen concentration constant control described above is determined by the amount of the HC gas component oxidized in the second flow passage. In consequence, the quantity of the critical current flowing through the second pump corresponds to the HC gas concentration, and the HC gas concentration can be thus measured on the basis of the critical current flowing through the second pump cell. The gas concentration of other gases such as the NH₃ gas can be measured on the basis of the same principle.

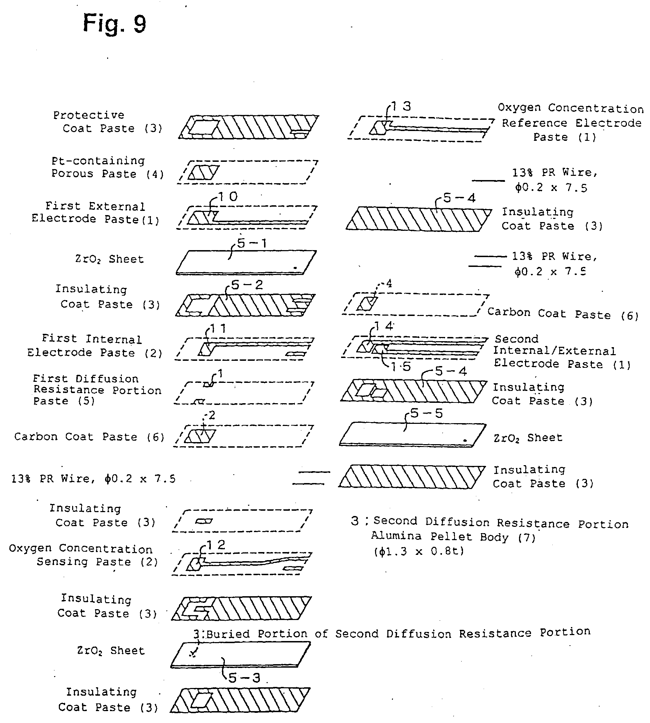

Next, a preferred production example of a sensor, when the present invention is applied to a nitrogen oxide concentration sensor (NOx gas sensor), will be explained. Fig. 9 is an explanatory view useful for explaining the layout of the nitrogen oxide concentration sensor according to an embodiment of the invention. Incidentally, reference numerals in Fig. 9 are directed to represent the relation of correspondence with the constituent elements between Fig. 1 and Fig. 9.

Referring to Fig. 9, the sensor is produced by laminating ZrO₂ green sheets, pastes for electrodes, and the like, and firing the resulting laminate. As the paste material for insulating coats or electrodes is printed by screen printing to predetermined ZrO₂ green sheets, insulating layers and electrodes are formed in lamination at predetermined positions of the sensor. Hereinafter, a production example of each constituent component of the sensor such as the ZrO₂ green sheet will be explained.

### Formation of ZrO₂ green sheet:

ZrO₂ powder is calcined in an atmospheric furnace. The ZrO₂ powder so calcined, a dispersant and an organic solvent are mixed with balls and are allowed to disperse. A solution of an organic binder dissolved in an organic solvent is added to the mixture and mixed to give a slurry. A ZrO₂ green sheet having a thickness of about 0.4 mm is prepared from this slurry by a doctor blade process, and is dried.

### Printing paste:

(1) For external electrode 10 of first pump cell, oxygen concentration reference electrode 13, internal and external electrodes 14 and 15 of second pump cell:
   Pt powder, ZrO₂ powder and a suitable amount of the organic solvent are mixed and allowed to disperse. A solution of an organic binder dissolved in an organic solvent is added to the mixture, and after a viscosity regulator is added, the mixture is mixed to give a paste.
(2) For internal electrode 11 of first pump cell, oxygen concentration sensing electrode 12:
   Pt powder, ZrO₂ powder, Cu powder and a suitable amount of an organic binder are mixed and allowed to disperse. A solution of an organic binder dissolved in an organic solvent is added to the mixture, and after a viscosity regulator is added, mixture is mixed to give a paste.
(3) For insulating coat and protective coat:
   Alumina powder and a suitable amount of an organic solvent are mixed and dissolved, and after a viscosity regulator is further added, the mixture is mixed to give a paste.
(4) For Pt-containing porous body (or lead wire):
   Alumina powder, platinum powder, an organic binder and an organic solvent are mixed and allowed to disperse, and after a viscosity regulator is further added, the mixture is mixed to give a paste.
(5) For first and second diffusion resistance portions 1, 3:
   Alumina powder, an organic binder and an organic solvent are mixed and allowed to disperse, and after a viscosity regulator is further added, the mixture is mixed to give a paste.
(6) For carbon coat:
   Carbon powder, an organic binder and an organic solvent are mixed and allowed to disperse, and after a viscosity regulator is further added, the mixture is mixed to give a paste. Incidentally, because the carbon coat is formed by printing, an electrical contact between the electrodes, for example, can be prevented. The carbon coat is used for defining the flow passages (internal cavity). Because carbon is burnt away during firing, the carbon coat layer does not exist in the burned body.

### ZrO₂ lamination method, binder removal and firing:

After the ZrO₂ green sheets for the second and third layers are press-bonded, the portion having a 1.3 mm diameter) which the second diffusion resistance portion penetrates through is punched out. After punching, a green, circular cylinder mold which is to serve as the second diffusion resistance portion is buried, and all the ZrO₂ green sheets are press-bonded. The binder is removed from the green mold so obtained, and the mold is then fired.

Firing of the green mold described above is preferably carried out in an open air atmosphere, an inert gas atmosphere of Ar, N₂, or the like, or an atmosphere having an oxygen concentration of 2% or below.

In the preferred embodiment of the present invention, the Cu-containing porous electrode contains at least one of Pt, Pd, Rh, Ir, Ru and Os as the platinum group element. The Cu addition porous electrode may contain the platinum group element in the form of alloys between the platinum group elements or alloys of the platinum group element with other elements.

In the preferred embodiment of the present invention, the Cu-containing porous electrode contains Cu in the form of the simple substance, alloys with the platinum group elements such as Pt or oxides.

In the preferred embodiment of the present invention, the Cu-containing porous electrode contains 0.3 to 4 wt%, preferably 1 to 3 wt%, of Cu in the electrode components. The preferred Cu-containing electrode of the present invention contains 0.9 to 12 mol%, preferably 3 to 9 mol%, of Cu in the electrode components with the balance consisting of the platinum group element such as Pt. In this way, the oxygen pumping capacity of the electrode can be improved. Preferably, further, the grain size of powder containing the platinum group element is 1 to 15 µm and the grain size of Cu-containing powder is 0.2 to 5 µm.

In the preferred embodiment of the present invention, the Cu-containing porous electrodes so formed on the oxygen ion conductor as to face the flow passage (the first flow passage 2 in Fig. 1) for controlling the oxygen concentration, Cu is added to one of the electrodes (particularly, Cu is added to Pt) so that the lowest voltage (critical voltage), which is applied between the Cu-containing porous electrode and the other electrode formed on the oxygen ion conductor in order to allow a critical current of oxygen to flow through this oxygen ion conductor, becomes lower by at least 50 mV, preferably by at least 100 mV, than when Au is added to the platinum group element (particularly, Cu is added to Pt) in one of the electrodes.

In the preferred embodiment of the present invention, only a part of the internal electrode of the first pump cell such as the outer peripheral portion directly facing the first flow passage (particularly, the interface) comprises the Cu-containing porous electrode.

In the preferred embodiment of the present invention, Cu-containing powder in the Cu-containing porous electrode is supported by other powder such as the powder that contains the platinum group element.

In the preferred embodiment of the present invention, the oxygen concentration reference electrode (oxygen partial pressure reference electrode), that is formed in such a manner as to oppose, or to be parallel to, the oxygen concentration sensing electrode (oxygen partial pressure sensing electrode) so formed as to face the first flow passage, and moreover, in such a manner as to be out of contact from the measured gas, is the self-generating reference electrode. A weak current is supplied from outside to the oxygen concentration reference electrode, for example. Alternatively, a voltage is applied so that oxygen is pumped out to the side of the oxygen concentration reference electrode. Consequently, oxygen is supplied to the oxygen concentration reference electrode through the conduction of the oxygen ions in the solid electrolyte layer, or through the lead wire, and the atmosphere over, and in the proximity of, the oxygen concentration reference electrode is converted to a stable high oxygen concentration atmosphere or the atmosphere having an oxygen concentration of almost 100%.

In the preferred embodiment of the present invention, the oxygen concentration reference electrode (oxygen partial pressure reference electrode) is so formed as to oppose or to be parallel to, the oxygen concentration sensing electrode (oxygen partial pressure sensing electrode), that is formed in such a fashion as to face the first flow passage to detect the oxygen concentration, and also in such a fashion as not to come into contact with the measured gas, comprises the atmosphere reference electrode. For example, the oxygen concentration reference electrode is formed on the solid electrolyte layer in such a manner as to face the flow passage communicating with the open air. Alternatively, the oxygen concentration reference electrode is communicated with the open air through the lead wire.

The above mentioned and other features and aspects of the present invention are illustrated by the following drawings, in which:
Fig. 1 is an explanatory view of a nitrogen oxide concentration sensor according to the first embodiment of the present invention and shows the section of the distal end portion of the sensor cut in the lamination direction along its longitudinal direction.
Fig. 2 is a graph showing critical characteristics of a first pump cell for O₂ in the sensors of Embodiment 1 and Comparative Example, respectively.
Figs. 3(A) and 3(B) show critical characteristics of the first pump cell for NO in the sensors of Embodiment 1 and Comparative Example, respectively, and Fig. 3(B) is a graph showing in enlargement of the portion Vp1: 0 to 200 mV in (A).
Fig. 4 is a graph showing the relationship between the oxygen concentration and the first pump current in the sensors of Embodiment 1 and Comparative Example, respectively.
Fig. 5 is a graph showing the relationship between the oxygen concentration and an impressed voltage to the first pump cell in the sensors of Embodiment 1 and Comparative Example, respectively.
Fig. 6 is a graph showing the relationship between the oxygen concentration and offset of a second pump current in the sensors of Embodiment and Comparative Example, respectively.
Fig. 7 is a graph showing the relationship between the NO sensing characteristics and the oxygen concentration in the sensors of Embodiment 1 and Comparative Example, respectively.
Fig. 8 is an explanatory view of an HC gas concentration sensor according to Embodiment 2 of the present invention, and shows the section of the distal end portion of the sensor cut in the lamination direction along its longitudinal direction.
Fig. 9 is an explanatory view useful for explaining layout of the nitrogen oxide concentration sensor according to one embodiment of the present invention.
Fig. 10 is a graph showing the relationship between the Cu-content of the first internal electrode and the voltage applied to the first pump cell.
Fig. 11 is a graph showing the relationship between the Cu-content of the first internal electrode and the NO sensing characteristics.

### Embodiment 1:

First, an embodiment of the gas sensor of the present invention which is applied to a nitrogen oxide concentration sensor will be explained. This sensor is produced in accordance with the production example described in the foregoing paragraph of the embodiment. Fig. 1 is an explanatory view for explaining the nitrogen oxide concentration sensor according to Embodiment 1 and shows the section when the distal end portion of the sensor is cut in the lamination direction along the longitudinal direction.

Referring to Fig. 1, the sensor comprises layers 5-1 to 5-5, functioning as a solid electrolyte layer having the oxygen ion conductivity or as an insulating layer, and are laminated in order. An insulating layer is formed between each pair of solid electrolyte layers. The first flow passage 2 is defined in the same layer as the second layer 5-2 while it is encompassed by the first layer 5-1, the second layer (insulating layer) 5-2 and the third layer 5-3. The second flow passage 4 is defined in the same layer as the fourth layer (insulating layer) 5-4 while it is encompassed by the third layer 5-3, the fourth layer 5-4 and the fifth layer 5-5. The first diffusion resistance portion 1 is formed at a part of each side surface of the second layer 5-2. One of the sides of the first flow passage 2 is communicated with the measured atmosphere through the first diffusion resistance portion 1. The second diffusion resistance portion 3 is formed inside the third layer 5-3. One of the sides of the second diffusion resistance portion 3 is open to the other side of the first flow passage 2 (the position spaced apart from the first diffusion resistance portion 1). The other side of the second diffusion resistance portion 3 is open to the second flow passage 4. Therefore, the first flow passage 1 and the second flow passage 2 communicate with each other through the diffusion resistance.

The first external electrode 10 is formed on one of the surfaces of the first layer 5-1 as the oxygen ion conductive solid electrolyte layer that faces the measured atmosphere, while the first internal electrode 11 is formed on the other surface facing the first flow passage 2. However, the length of the first internal electrode 11 is smaller than that of the first external electrode 10. This first internal electrode 11 extends from a position in the proximity of the first diffusion resistance portion 1 to a position immediately before, and above, the opening of the second diffusion resistance portion 3. The first pump cell 6 comprises the first layer 5-1, the first external electrode 10 and the first internal electrode 11.

The oxygen concentration sensing electrode 12 is formed around the opening of the second diffusion resistance portion 3 on one of the surfaces of the third layer 5-3 as the oxygen ion conductive solid electrolyte layer that faces the first flow passage 2. The oxygen concentration reference electrode 13 is formed on the other surface (sandwiched between the third layer 5-3 and the fourth layer 5-4) of the third layer 5-3. The oxygen concentration measuring cell 7 comprises the third layer 5-3, the oxygen concentration sensing electrode 12 and the oxygen concentration reference electrode 13.

The second internal electrode 14 is formed on one of the surfaces of the fifth layer 5-5 as the oxygen ion conductive solid electrolyte layer in such a manner as to face the second flow passage 4. The second external electrode 15 is formed outside the second flow passage 2 (between the fourth layer 5-4 and the fifth layer 5-5) while it is encompassed by the fourth layer (insulating layer) 5-4. The second pump cell 8 comprises the fifth layer 5-5, the second internal electrode 14 and the second external electrode 15.

Each of the first internal electrode 11 and the oxygen concentration sensing electrode 12 is produced by blending 98 wt% of Pt powder having a grain size of 2 to 10 µm, 2 wt% (6 mol%) of Cu powder having a grain size of 0.5 to 3 µm, each powder being the electrode component, 14 part by weight of ZrO₂ on the basis of 100 parts by weight of these electrode components, and a suitable amount of ethyl cellulose (7 cps) as a binder, mixing them by a mixer to prepare a paste, and shaping the paste in the manner described in the paragraph of the embodiment.

To operate the sensor at a suitable temperature, a heater (not shown) is mounted or bonded to the upper layer and/or the lower layer of the sensor.

Next, the electric circuit connected to this sensor will be explained. Referring to Fig. 1 in succession, the first internal electrode 11, the oxygen concentration sensing electrode 12 and the second internal electrode 14 are grounded through leads and a resistor 20. A reference voltage Vs is inputted from a reference voltage source 23 to a non-inversion input terminal of a differential amplifier 24 and the oxygen concentration reference electrode 13 is electrically connected to the inversion input terminal through a lead. After all, the potential difference between the oxygen concentration sensing electrode 12 and the oxygen concentration reference electrode 13 (that is, oxygen concentration cell electromotive force) is inputted to this inversion input terminal. An oxygen reference pole generation power source 21 is electrically connected through the resistor 22 to a node between the inversion input terminal and the oxygen concentration reference electrode 13 in order to supply the weak current Icp to the oxygen concentration reference electrode 13 and to form an oxygen atmosphere having a predetermined concentration (oxygen reference chamber) in the peripheral portion. The output terminal of the differential amplifier 24 electrically connected to the first external electrode 10 through a resistor 25 and the lead. The differential amplifier 24 applies variably a voltage between the first external electrode 10 and the first internal electrode 11 so that the potential difference between the oxygen concentration sensing electrode 12 and the oxygen concentration reference electrode 13 is equal to the reference voltage Vs. Oxygen (O₂) is dissociated on the first external electrode 10 and on the first internal electrode 11, and the resulting oxygen ions flow through the first layer (solid electrolyte layer 5-1) and turn again to O₂ on the other electrode. The first pump current Ip1 flows through the resistor 25 in the forward or backward direction depending on the oxygen concentration inside the first flow passage 2, that is, depending on the oxygen concentration of the measured atmosphere. The oxygen concentration in the measured gas can be determined on the basis of this first pump current Ip1.

A constant voltage source 26 is connected to the non-inversion input terminal of the amplifier 27 and a constant voltage Vp2 is inputted. The output terminal of the amplifier 27 is electrically connected to the second external electrode 15 through a resistor 28 and a lead. Consequently, a constant voltage is applied between the second internal electrode 14 and the second external electrode 15. Nitrogen oxides (typically, NO) and O₂ are dissociated on the second internal electrode 14 and the resulting oxygen ions flow through the fifth layer (solid electrolyte layer) 5-5 and again turn to O₂ on the second external electrode 15. Because the oxygen concentration is kept constant as much as possible in the second flow passage 4, the second pump current Ip2 flows through the resistor 28 depending on the nitrogen oxide concentration. This second pump current Ip2 can be picked up by connecting an ammeter to the node between the inversion input terminal of the amplifier 27 and the resistor 28.

Various tests were conducted using the nitrogen oxide concentration sensor of Embodiment 1 explained above. As Comparative Example, a nitrogen oxide concentration sensor was produced in the same way as the sensor of Embodiment 1 with the exception that the electrode components of the first internal electrode and the oxygen concentration sensing electrode (11 and 12 in Fig. 1) were changed to Pt: 99% and Au: 1 wt% (grain size: 1 to 40 µm).

### Test Example 1:

The critical current characteristics of the first pump cell were evaluated for the sensors of Embodiment 1 and Comparative Example under the following test condition.

### [Test condition of Test Example 1]

### measured gas composition:

(1) O₂ (750 ppm) + N₂ (bal.)
(2) NO (1,500 ppm) + N₂ (bal.)
   measured gas temperature: 680°C
   temperature at sensing portion: 800°C
   impressed voltage to first pump cell: 0 to 800 mV (0.8 V/sec sweep supply)
   oxygen concentration constant control: not effected

### Test Example 1-1:

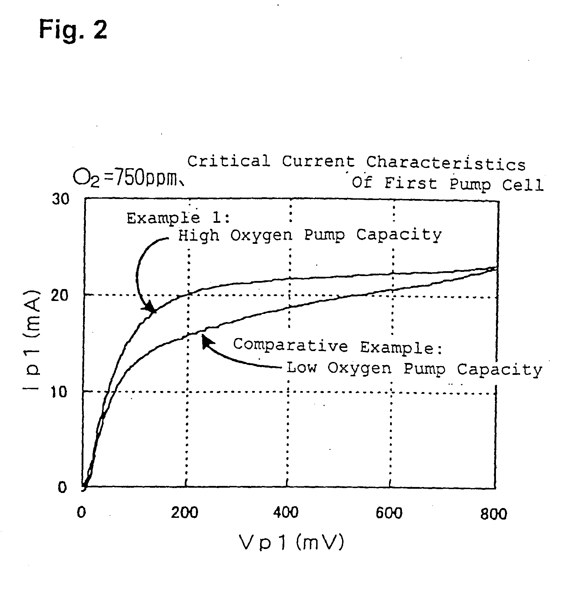

First, the measured gas having the composition described in the item (1) was charged into the sensors of Embodiment 1 and Comparative Example, respectively. The first pump current Ip1 was measured by compulsively changing the voltage Vp1 applied to the first pump cell but without executing the oxygen concentration constant control on the basis of the output of the oxygen concentration measuring cell, in order to examine the critical current characteristics of the first pump cells for oxygen. Next, the result will be explained. Fig. 2 is a graph showing the critical characteristics of the first pump cells of Embodiment 1 and Comparative Example for oxygen, respectively.

Referring to Fig. 2, the rise of the current Ip1-vs.-voltage Vp1 curve is quicker in the sensor of Embodiment 1 using the Cu-containing electrode than in Comparative Example using the Au-containing electrode (or, the gradient of the non-critical region is greater). In the sensor of Embodiment 1, Vp1 reached the equilibrium state, in which the critical current flowed, at a value lower by about 100 mV than in the sensor of Comparative Example. It could be thus appreciated that the oxygen pumping capacity of the Cu-containing electrode according to Embodiment 1 was superior to that of the first pump cell of Comparative Example.

### Test Example 1-2:

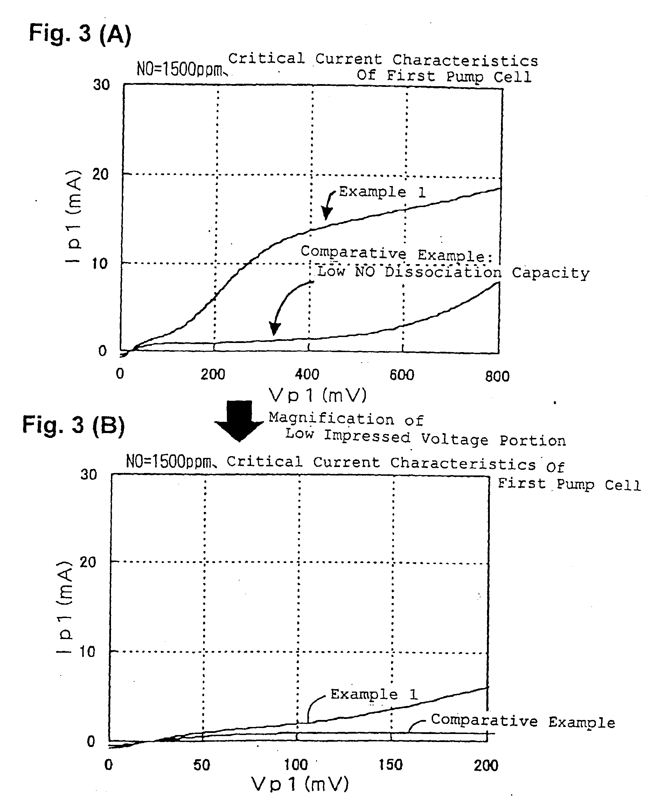

Next, the measured gas having the composition described in the item (2) was charged into the sensors of Embodiment 1 and Comparative Example, respectively, and the critical characteristics of the first pump cell for NO were examined, respectively. Next, the result will be explained. Fig. 3(A) is a graph showing the critical characteristics of the first pump cell for NO in the sensors of Embodiment 1 and Comparative Example, and Fig. 3(B) is a graph showing in enlargement the portion of Vp1: 0 to 200 mV in Fig. 3(A).

It can be seen from Figs. 3(A) and 3(B) that the sensor of Embodiment 1 using the Cu-containing electrode exhibited a lower tendency of NO dissociation restricting performance than the sensor of Comparative Example using the Au-containing electrode.

Table 1 shows the results of a regression analysis for the voltage Vp1 applied across the first pump cell versus the first pump current Ip1 flowing therethrough for the O₂ data and for the NO data. While Figs. 2, 3(A) and 3(B) each show the results for a single sensor with a Cu-containing electrode (Embodiment 1) and an Au-containing electrode (Comparative Example), the results of Table 1 have been obtained using averaged data. Values of seven first pump cells with an Au-containing electrode, and of four first pump cells with a Cu-containing electrode have been averaged and a regression analysis has been performed using the averaged data.

It is understood from the Table 1 that the higher the gradient value (a), the higher become the oxygen pumping capability and the NO dissociation capability of the first pump cell. The Cu-containing electrode for the first pump cell has a higher oxygen pumping capability than the Au-containing electrode and has a suppression capability of NO dissociation comparable to the Au-containing electrode.

Therefore, it can be appreciated from Table 1, too, that the oxygen pumping capacity of the Cu-containing electrode according to Embodiment 1 is excellent.

**Table 1**

| Each data of linear regression line {gradient (a), intercept (b)} | | | | |
|---|---|---|---|---|
| | O₂ = 750 ppm | | NO = 1,500 ppm | |
| | a | b | a | b |
| Au-containing electrode (Comp. Example) | 0.187 | -0.801 | 0.014 | -0.784 |
| Cu-containing Electrode (Embodiment 1) | 0.207 | -0.65 | 0.023 | -0.124 |
| Note 1): O₂ data was calculated between Vp1 = 20 and 50 mV Note 2): NO data was calculated between Vp1 = 20 and 100 mV. | | | | |

### Test Example 2:

Next, nitrogen oxide (NOx) sensing characteristics were evaluated for the sensors of Embodiment 1 and Comparative Example. The test condition was listed below.

### Test condition of Test Example 2:

### measured gas composition:

(1) NO (0 ppm) + O₂ (0, 1, 7, 16%) + CO₂ (10%) + H₂O (10%) + N₂ (bal.)
(2) NO (1,500 ppm) + O₂ (0, 1, 7, 16%) + CO₂ (10%) + H₂O (10%) + N₂ (bal.)
   measured gas temperature: 680°C
   temperature at sensing portion: 800°C
   impressed voltage to second pump cell: 450 mV
   oxygen concentration constant control: executed

First, the measured gas having the composition of the item (1) described above, where NO = 0 ppm, was charged into the sensors of Embodiment 1 and Comparative Example, respectively, and the oxygen concentration constant control on the basis of the output of the oxygen concentration measuring cell was carried out. Also, the constant voltage Vp2 was applied to the second pump cell, and the impressed voltage Vp1 to the first pump cell, the first pump current Ip1 and the second pump current Ip2 were measured, respectively.

### Test Example 2-1:

First, the result of the examination of the relationship between the oxygen concentration in the measured gas and the first pump current in the sensors of Embodiment 1 and Comparative Example will be explained. Fig. 4 is a graph showing the relationship between the oxygen concentration and the first pump current in the sensors of Embodiment 1 and Comparative Example, respectively.

As can be seen from Fig. 4, the value of the first pump current Ip1 increases in proportion to the increase of the oxygen concentration. It can be appreciated that the first pump cell (6 in Fig. 1) pumps up oxygen from the first flow passage (2 in Fig. 1) in such a fashion that the oxygen concentration in the gas diffusing into the second flow passage (4 in Fig. 1) becomes constant.

### Test Example 2-2:

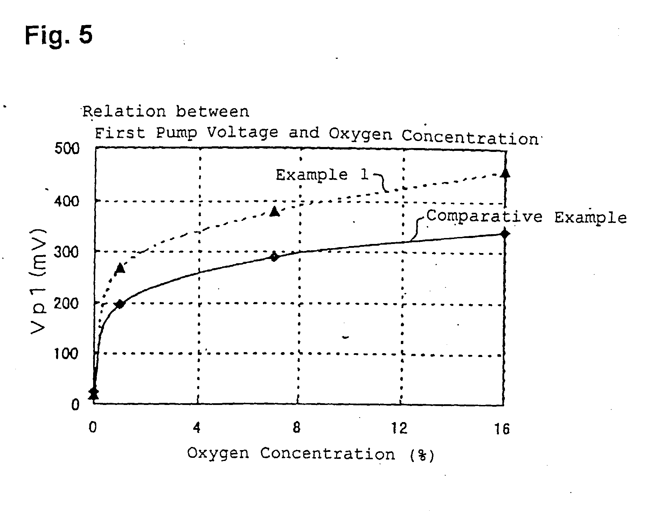

Next, the result of the examination of the relationship between the oxygen concentration in the measured gas and the impressed voltage to the first pump cell in the sensors of Embodiment 1 and Comparative Example will be explained. Fig. 5 is a graph showing the relationship between the oxygen concentration and the impressed voltage to the first pump cell in the sensors of Embodiment 1 and Comparative Example, respectively.

It can be appreciated from Fig. 5 that the sensor using the Cu-containing electrode according to Embodiment 1 reached the equilibrium state, where the critical current flowed, even in the high oxygen concentration region, at a voltage lower by about 100 mV than the sensor using the Au-containing electrode according to Comparative Example. In other words, it can be understood that Embodiment 1 had a lower value of the oxygen pumping voltage. It can thus be concluded that the first pump cell equipped with the Cu-containing electrode of Embodiment 1 was superior to the first pump cell of Comparative Example in the oxygen pumping capacity.

### Test Example 2-3:

Next, the measured gas having the composition described in the item (2) with NO = 1,500 ppm was charged into the sensors of Embodiment 1 and Comparative Example, respectively, and the oxygen concentration constant control was executed on the basis of the output of the oxygen concentration measuring cell. Furthermore, the impressed voltage Vp1 to the first pump cell, the first pump current Ip1 and the second pump current Ip2 were measured by applying the constant voltage Vp2 to the second pump cell.

### Test Example 2-3-1:

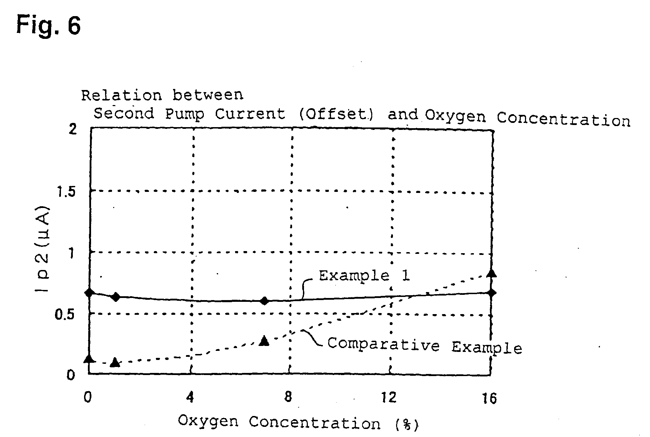

First, the result of the examination of the relationship between the oxygen concentration in the measured gas and offset of the second pump current in the sensors of Embodiment 1 and Comparative Example by setting the NO concentration in the measured gas to 0 ppm will be explained. Fig. 6 is a graph showing the relationship between the oxygen concentration and offset of the second pump current in the sensors of Embodiment 1 and Comparative Example, respectively.

It can be seen from Fig. 6 that oxygen concentration dependence of offset of the second pump current (Ip2 offset) of the sensor using the Cu-containing electrode according to Embodiment 1 was by far smaller than that of the second pump current of the sensor using the Au-containing electrode of Comparative Example. Therefore, it can be appreciated that the sensor according to Embodiment 1 had higher accuracy of the oxygen concentration constant control by the first pump cell (6 in Fig. 1).

### Test Example 2-3-2:

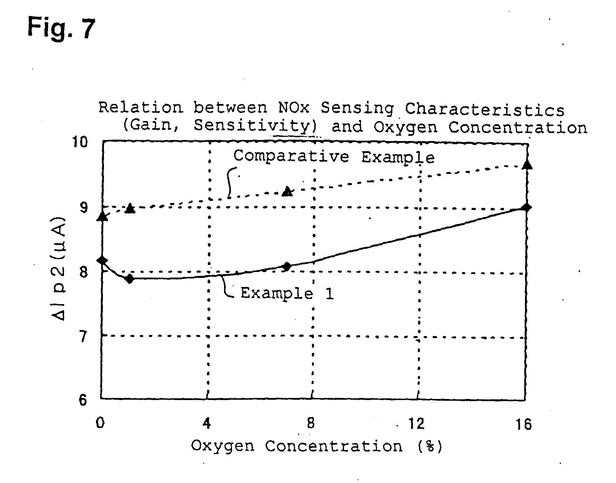

Next, the second pump current was measured by setting the NO concentration in the measured gas to NO = 1,500 ppm in the sensors of Embodiment 1 and Comparative Example, respectively, and the difference between the second pump current, when NO = 1,500 ppm, and the second pump current (offset) when NO = 0 ppm as described above, that is, ΔIp2 (NO sensing characteristics, sensitivity of Ip2) was determined. Fig. 7 is a graph showing the relationship between the NO sensing characteristics (ΔIp2) and the oxygen concentration in the sensors of Embodiment 1 and Comparative Example, respectively.

It can be seen from Fig. 7 that the offset of the second pump current (Ip2 offset; the value ΔIp2 when the oxygen concentration is 0%) of the sensor using the Cu-containing electrode according to Embodiment 1 was somewhat smaller than that of the sensor using the Au-containing electrode of Comparative Example. This is because the gas inflow rate flowing into the sensor (element) was smaller than that of Comparative Example. It can be understood also that when this difference of the gas inflow rate was taken into consideration, the sensor of Embodiment 1 had NO sensing performance equal, or superior, to that of the sensor of Comparative Example.

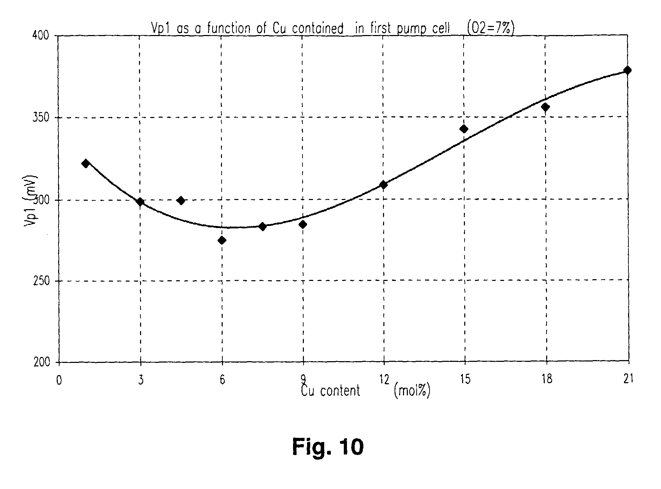

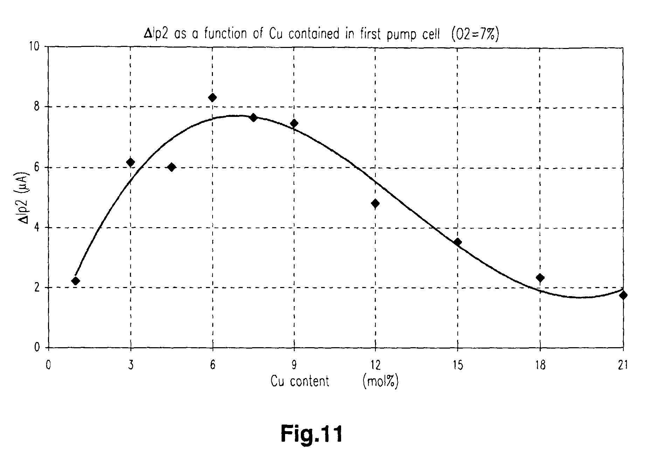

Next, the effect of a variation of the Cu-content of the Cu-containing electrode has been examined. Figure 10 shows the relationship between the Cu-content and the voltage impressed to the first pump cell Vp1. Figure 11 shows the relationship between the Cu-content and the NO sensing characteristics ΔIp2. It will be appreciated from the results shown that a sensor with a Cu-containing electrode has an excellent oxygen pumping capacity and an excellent NO sensing performance for a wide range of Cu-content. It can further be seen from both figures that the most favorable performance is achieved for a Cu content in the range of 3 to 9 mol%. There, the impressed voltage Vp1 at which the critical current flowed is low (high oxygen pumping capacity). At the same time, the sensitivity of the second pump current Ip2 to changes in the NO concentration is high (large ΔIp2, i.e. high NO sensing performance).

### Embodiment 2:

Next, another embodiment wherein the present invention is applied to an HC gas concentration sensor will be explained. The sensor of this embodiment, too, is produced substantially in the same way as the production example of the nitrogen oxide concentration sensor described in the fore-going paragraph of the embodiment. Fig. 8 is an explanatory view useful for explaining the HC gas concentration sensor according to Embodiment 2 of the present invention, and shows the section of the distal end portion of the sensor cut in the lamination direction along its longitudinal direction. Incidentally, like reference numerals are used in Fig. 8 to identify like constituent elements as in Fig. 1.

Referring to Fig. 8, this sensor comprises layers 5-1 to 5-6, that function as the oxygen ion conductive solid electrolyte layers and the insulating layers, and are laminated in order. The first flow passage 2 is defined in the same layer as the second layer (insulating layer) while it is encompassed by the first layer 5-1, the second layer 5-2 and the third layer 5-3. The second flow passage 4 is defined in the same layer as the fifth layer 5-5 while it is encompassed by the fourth layer 5-4, the fifth layer 5-5 and the sixth layer 5-6. The first diffusion resistance portion 1 is formed at a part of each side surface of the second layer 5-2. One of the sides of the first flow passage 2 is communicated with the measured atmosphere through the first diffusion resistance portion 1. The second diffusion resistance portion 3 is formed in the third layer 5-3 and the fourth layer 5-4 in such a fashion as to penetrate through these layers. One of the sides of the second diffusion resistance portion 3 is open to the other side of the first flow passage 2 (at the position spaced apart from the first diffusion resistance portion 1). The other side of the second diffusion resistance portion 3 is open to the second flow passage 4. Therefore, the first flow passage 1 and the second flow passage 2 communicate with each other through the diffusion resistance.

The first external electrode 30 is formed on one of the surfaces of the first layer 5-1 that is the oxygen ion conductive solid electrolyte layer, and faces the measured atmosphere, while the first internal electrode 31 is formed on the other surface facing the first flow passage 2. However, the length of the first internal electrode 31 is smaller than that of the first external electrode 30. The first internal electrode 31 extends from a position in the proximity of the first diffusion resistance portion 1 to a position immediately before, and above, the opening of the second diffusion resistance portion 3. The first pump cell 6 comprises the first layer 5-1, the first external electrode 30 and the first internal electrode 31.

The oxygen concentration sensing electrode 32 is formed on one of the surfaces of the third layer 5-3 that is the oxygen ion conductive solid electrolyte and faces the first flow passage 2, around the opening of the second diffusion resistance portion 3. The oxygen concentration reference electrode 33 is formed on the other surface of the third layer 5-3 or on one of the surfaces of the fourth layer (between the third layer 5-3 and the fourth layer 5-4). The oxygen concentration measuring cell 7 comprises the third layer 5-3, the oxygen concentration sensing electrode 32 and the oxygen concentration reference electrode 33.

The second internal electrode 34 is formed on the other surface of the fourth layer 5-4 that is the oxygen ion conductive solid electrolyte layer and faces the second flow passage 4. The second pump cell 38 comprises the fourth layer 5-4, the second internal electrode 34 and the oxygen concentration reference electrode 33.

A heater (not shown) is mounted or bonded to the upper layer and/or lower layer of the sensor so as to operate the sensor at a suitable temperature.

Next, the electric circuit connected to this sensor will be explained. Referring to Fig. 8 in succession, the first internal electrode 31 and the oxygen concentration sensing electrode 32 are grounded through the lead and the resistor 39. The reference voltage Vs is inputted from the reference voltage source 42 to the non-inversion input terminal of the differential amplifier 43, and the oxygen concentration reference electrode 33 is electrically connected to its inversion input terminal through the lead. After all, the potential difference between the oxygen concentration sensing electrode 32 and the oxygen concentration reference electrode 33 (that is, oxygen concentration cell electromotive force) is inputted to this inversion input terminal. Furthermore, the oxygen reference pole generation power source 40 is electrically connected through the resistor 41 to the node between the inversion input terminal and the oxygen concentration reference electrode 33 so that the weak current Icp can be supplied to the oxygen concentration reference electrode 33 and the oxygen atmosphere having a predetermined concentration (oxygen reference chamber) can be formed therearound. The output terminal of the differential amplifier 43 is connected electrically to the first external electrode 30 through the resistor 44 and the lead. This differential amplifier 43 applies variably the voltage between the first external electrode 30 and the first internal electrode 31 so that the potential difference between the oxygen concentration sensing electrode 32 and the oxygen concentration reference electrode 33 is equal to the reference voltage Vs. Oxygen (O₂) is dissociated on the first external electrode 30 or on the first internal electrode 31, and the resulting oxygen ions flow through the first layer (solid electrolyte layer) 5-1 and again turn to O₂ on the other electrode. The first pump current Ip1 flows through the resistor 44 in the forward or backward direction depending on the oxygen concentration in the first flow passage 2, that is, the oxygen concentration of the measured atmosphere. The oxygen concentration in the measured gas can be determined on the basis of this first pump current Ip1.

The positive terminal of the constant voltage source 45 is electrically connected to the oxygen concentration reference electrode 33, and its negative terminal is electrically connected to the second internal electrode 34 through the resistor 46. Therefore, the constant voltage is applied between the oxygen concentration reference electrode 33 and the second internal electrode 34, and the HC gas components are oxidized on the second internal electrode 34. Oxygen is consumed and the oxygen ions generated by dissociation of remaining O₂ flow through the fourth layer 5-4 and turn again to O₂ on the oxygen concentration reference electrode 33. Because the oxygen concentration is kept constant as much as possible in the second flow passage 4, the second pump current Ip2 corresponding to the HC gas concentration flows through the resistor 46. The HC gas concentration can be determined on the basis of this second pump current Ip2.

The gas sensor according to the present invention can reduce oxygen concentration dependence of the gas concentration measurement and can accurately measure the gas concentrations such as nitrogen oxides (NOx), HC, NH₃, and so forth.

## Claims

1. A gas sensor comprising:
a first flow passage (2) communicating with a measurement gas through a first diffusion resistance portion (1);
a second flow passage (4) communicating with said first flow passage (2) through a second diffusion resistance portion (3);
a first pump cell (6) having a porous first internal electrode (11) and a porous first external electrode (10) formed on an oxygen ion conductor (5-1) in such a manner as to face said first flow passage (2) from inside and outside said first flow passage (2) for pumping oxygen out from, and into, said first flow passage (2) through said oxygen ion conductor (5-1); and
a second pump cell (8) having porous electrodes (14, 15) formed on an oxygen ion conductor (5-5) in such a manner as to face said second flow passage (4) from inside and outside said second flow passage (4), for causing a current, that is generated when a measurement gas component is dissociated, or oxidized, or reduced, inside said second flow passage (4) in accordance with the concentration of said measurement gas component, to flow between said porous electrodes (14, 15) depending on conductivity of oxygen ions;
wherein only the outer peripheral portion of said first internal electrode (11) directly facing said first flow passage (2) contains a platinum group element and Cu.

2. A gas sensor according to claim 1, which further comprises:
an oxygen concentration sensing electrode (12) so formed on an oxygen ion conductor (5-3) as to detect an oxygen concentration in the gas introduced into said gas sensor; wherein:
the oxygen pump-in or pump-out amount by said first pump cell is controlled on the basis of the potential of said oxygen concentration sensing electrode (12); and
at least a part of said oxygen concentration sensing electrode (12) contains a platinum group element and Cu.

3. A gas sensor according to claim 1 or 2, wherein said first internal electrode (11) and/or said oxygen concentration sensing electrode (12) contains 0.3 to 4 wt% of Cu on the basis of the total content of the platinum group element and Cu.

4. A gas sensor according to any of claims 1 to 3, wherein said measurement gas component is any one of NOx, HC and NH₃.

5. A gas sensor comprising:
a first flow passage (2) communicating with a measurement gas through a first diffusion resistance portion (1);
a second flow passage (4) communicating with said first flow passage (2) through a second diffusion resistance portion (3);
a first pump cell (6) having a porous first internal electrode (11) and a porous first external electrode (10) formed on an oxygen ion conductor (5-1) in such a manner as to face said first flow passage (2) from inside and outside said first flow passage (2) for pumping oxygen out from, and into, said first flow passage (2) through said oxygen ion conductor (5-1); and
a second pump cell (8) having porous electrodes (14, 15) formed on an oxygen ion conductor (5-5) in such a manner as to face said second flow passage (4) from inside and outside said second flow passage (4), for causing a current, that is generated when a measurement gas component is dissociated, or oxidized, or reduced, inside said second flow passage (4) in accordance with the concentration of said measurement gas component, to flow between said porous electrodes (14, 15) depending on conductivity of oxygen ions;
wherein at least a part of said first internal electrode (11) contains a platinum group element and Cu, and is obtainable through firing a green sheet comprising Cu-containing powder with a grain size of 0.2 and 5 µm.

6. A gas sensor according to claim 5, which further comprises:
an oxygen concentration sensing electrode (12) so formed on an oxygen ion conductor (5-3) as to detect an oxygen concentration in the gas introduced into said gas sensor; wherein:
the oxygen pump-in or pump-out amount by said first pump cell is controlled on the basis of the potential of said oxygen concentration sensing electrode (12); and
at least a part of said oxygen concentration sensing electrode (12) contains a platinum group element and Cu.

7. A gas sensor according to claim 5 or 6, wherein said first internal electrode (11) and/or said oxygen concentration sensing electrode (12) contains 0.3 to 4 wt% of Cu on the basis of the total content of the platinum group element and Cu.

8. A gas sensor according to any of claims 5 to 7, wherein said measurement gas component is any one of NOx, HC and NH₃.

9. A gas sensor according to any of the preceding claims, wherein the platinum group element is at least one of the group consisting of Pt, Pd, Rh, Ir, Ru and Os.

10. An oxygen pump cell comprising:
one electrode (11) of a pair of electrodes (10, 11) so formed on an oxygen ion conductor (5-1) as to face a flow passage (2) for controlling an oxygen concentration, and containing a platinum group element as a main electrode component, and the other electrode (10) so formed as not to face said flow passage (2); wherein:
Cu is added to said one electrode (11) so that a critical voltage applied between said one and other electrodes (10, 11) in order to cause a critical current of oxygen to flow through said oxygen ion conductor (5-1) to drop by at least 50 mV in comparison with the case where said one electrode (11) comprises an electrode containing Au added to a platinum group element; and
oxygen is pumped out from, or pumped into, said flow passage by dissociating oxygen or an oxide on said one or other electrode (11, 10) and by causing the resulting oxygen ions to flow through said oxygen ion conductor (5-1), and a gas, the oxygen concentration of which is controlled, is generated inside said flow passage (2).
